# EUROPEAN PATENT APPLICATION

(11) **EP 4 265 417 A1**
(43) Date of publication of application: **25.10.2023**
(21) Application number: 22742568.3
(22) Date of filing: 18.01.2022
(51) Int. Cl.: B32B 37/00, B32B 5/12, B32B 5/26, G06N 99/00

(54) **TRAINING METHOD FOR LEARNING DEVICE, METHOD FOR DESIGNING DESIGN PATTERN, METHOD FOR MANUFACTURING LAMINATE, AND DESIGN DEVICE FOR DESIGN PATTERN**

(30) Priority: 20.01.2021 JP 2021007444
(71) Applicant: Mitsubishi Heavy Industries, Ltd., Tokyo 100-8332 (JP)
(72) Inventor: FUKUDA, Akio, Tokyo 100-8332 (JP)
(74) Representative: Hoffmann Eitle
(86) International application number: PCT/JP2022/001599
(87) International publication number: WO 2022/158446

(57) **Abstract**

Provided is a training method for a learning device, in which the learning device is trained on a search model for searching for a lamination pattern of a laminate formed by using fiber sheets as unidirectional materials in which the alignment direction of fibers is one direction and by laminating the fiber sheets, wherein the search model serves as a training model in which a value function and a policy function including constraint conditions pertaining to lamination of the fiber sheets are used, and the learning device executes a step for acquiring an initial lamination pattern, which is the lamination pattern of an initial state, and a step for using the initial lamination pattern as an input and training the search model such that the lamination pattern satisfies the constraint conditions.

## Description

### Technical Field

The present disclosure relates to a training method of a learning device, a design method of a design pattern, a manufacturing method of a laminate, and a design device of a design pattern.

### Background Art

In the related art, a design method of a composite material laminated body, in which a lay-up configuration of a composite material laminated body, which is a laminate, is designed, is known (for example, see PTL 1). In the design method, the lay-up configuration is calculated with a physical property value as an input, using a relational expression as a prediction model that predicts the lay-up configuration from the physical property value.

### Citation List

### Patent Literature

[PTL 1] Japanese Patent No. 6625306

### Summary of Invention

### Technical Problem

The lay-up configuration has a constraint condition such as lay-up order in a laminating direction. As a constraint condition, for example, there is a condition in which a difference in an alignment angle formed by alignment directions of fibers of two layers adjacent to each other is 45° or smaller or the like. In the design method of PTL 1, lay-up configuration information that is information of the lay-up configuration in consideration of the constraint condition is calculated based on the physical property value using the relational expression.

However, in PTL 1, in a case where the physical property value is used as an input value, when the lay-up configuration information in consideration of the constraint condition is calculated, a solution cannot be predicted, and there is a possibility in which the lay-up configuration information is not obtained. In addition, in PTL 1, even in a case where a solution converges, there is a possibility in which a considerable calculation time is required, the calculation time increases as the number of lay-ups increases, and it is difficult to suppress an increase in calculation costs.

An object of the present disclosure is to provide a training method of a learning device, a design method of a design pattern, a manufacturing method of a laminate, and a design device of a design pattern that can easily derive an appropriate lay-up pattern in consideration of a constraint condition.

### Solution to Problem

According to an aspect of the present disclosure, there is provided a training method of a learning device in which the learning device trains a search model for searching a lay-up pattern of a laminate formed by laminating fiber sheets that are unidirectional materials in which alignment directions of fibers are one direction using the fiber sheets, and the search model is a learning model that includes a constraint condition related to lay-ups of the fiber sheets and in which a policy function and a value function are used, the method executed by the learning device including a step of acquiring an initial lay-up pattern that is the lay-up pattern in an initial state and a step of training the search model such that the lay-up pattern satisfies the constraint condition, using the initial lay-up pattern as an input.

According to another aspect of the present disclosure, there is provided a design method of a design pattern in which the design pattern that is a lay-up pattern of the laminate which satisfies the constraint condition is designed by a design device using the search model trained through the training method of a learning device, the method executed by the design device including a step of deriving a candidate pattern that is the lay-up pattern which is a candidate for the laminate through a predetermined algorithm and a step of deriving the design pattern that is the lay-up pattern which satisfies the constraint condition by inputting the candidate pattern of the laminate into the search model.

According to still another aspect of the present disclosure, there is provided a manufacturing method of a laminate including a step of laminating the fiber sheets based on the design pattern designed through the design method of a design pattern and a step of integrating the laminated fiber sheets and forming the laminate.

According to still another aspect of the present disclosure, there is provided a design device of a design pattern that designs the design pattern which is a lay-up pattern of the laminate which satisfies the constraint condition using the search model trained through the training method of a learning device, the design device including a control unit that executes a step of deriving a candidate pattern that is the lay-up pattern which is a candidate for the laminate through a predetermined algorithm and a step of deriving the design pattern that is the lay-up pattern which satisfies the constraint condition by inputting the candidate pattern of the laminate into the search model.

### Advantageous Effects of Invention

With the present disclosure, the appropriate lay-up pattern can be quickly derived in consideration of the constraint condition.

### Brief Description of Drawings

Fig. 1 is an explanatory view related to a lay-up pattern.
Fig. 2 is a diagram related to a design device of a design pattern according to the present embodiment.
Fig. 3 is an explanatory view related to a search model.
Fig. 4 is a flowchart related to a training method of a design device according to the present embodiment.
Fig. 5 is a flowchart related to training of the search model.
Fig. 6 is a flowchart related to a design method of a design pattern according to the present embodiment.
Fig. 7 is a flowchart related to a manufacturing method of a laminate according to the present embodiment. Description of Embodiments

Hereinafter, an embodiment according to the present disclosure will be described in detail based on the drawings. The invention is not limited to the embodiment. In addition, components in the following embodiment include components that can be easily replaced by those skilled in the art or components that are substantially the same. Further, the components described below can be combined as appropriate, and in a case where there are a plurality of embodiments, the respective embodiments can also be combined.

### [Present Embodiment]

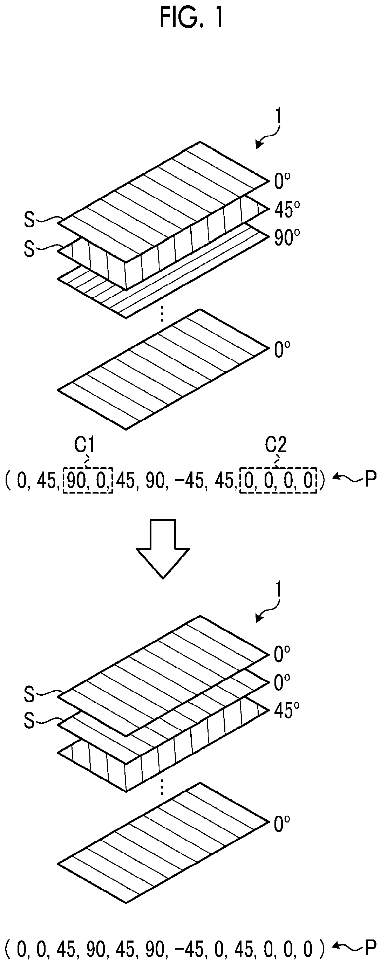

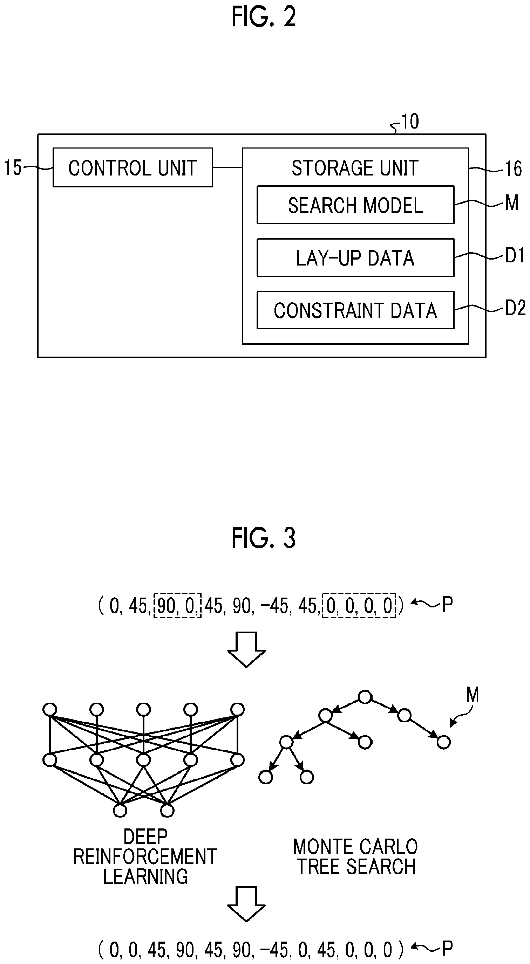

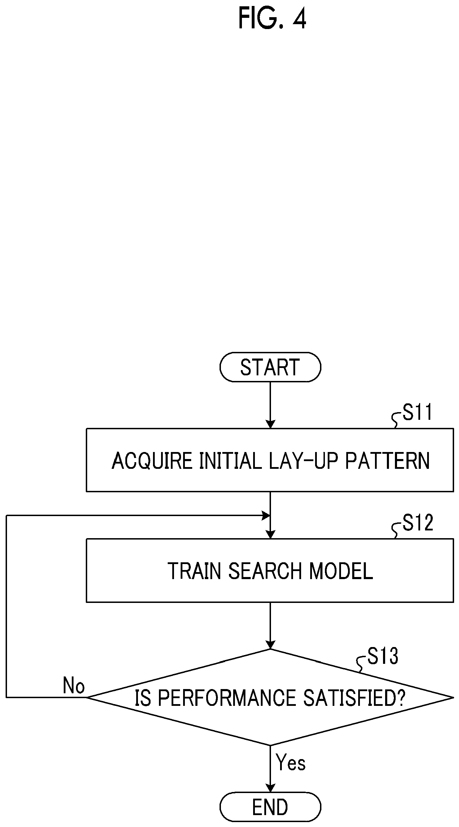

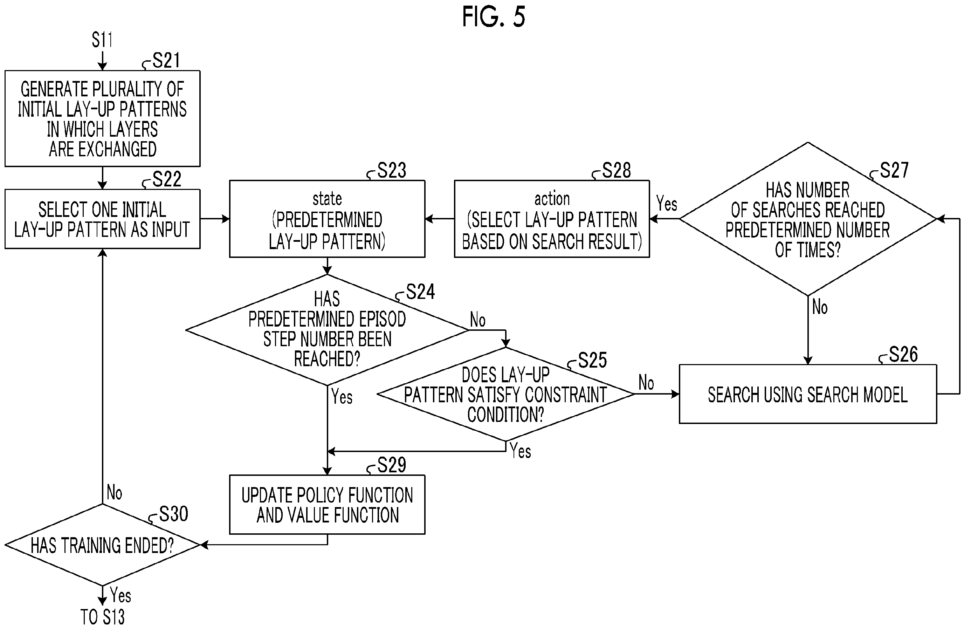

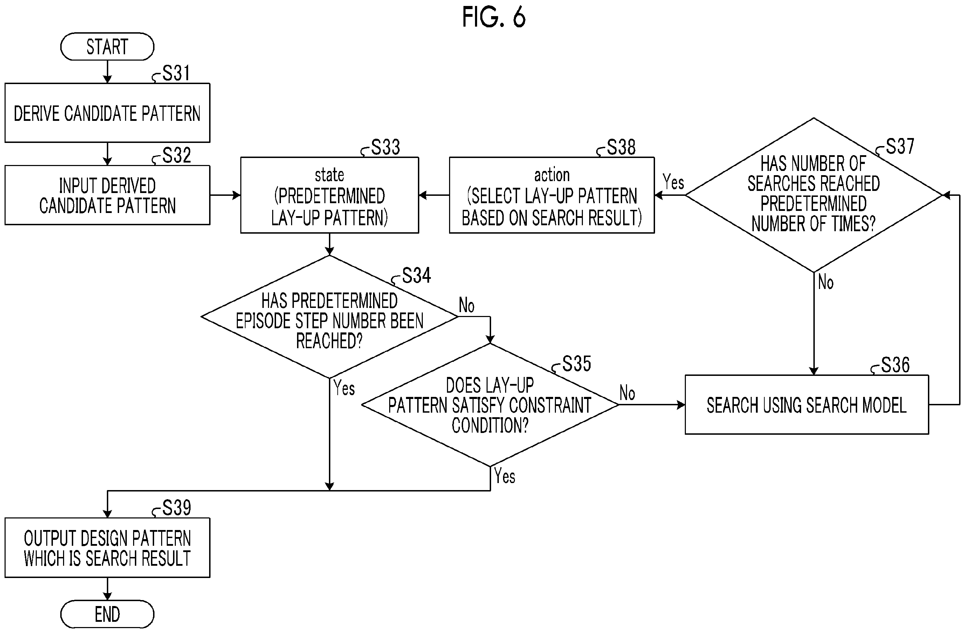

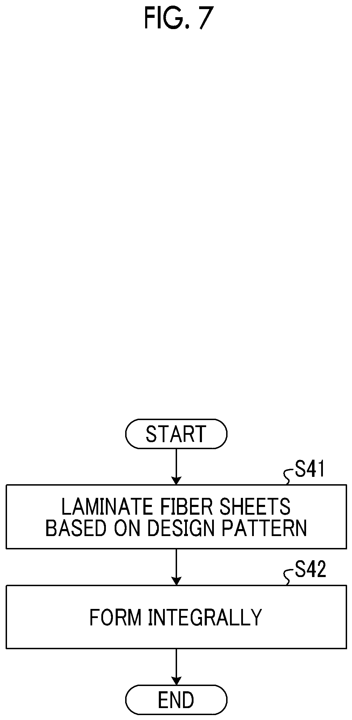

A training method of a learning device, a design method of a design pattern, a manufacturing method of a laminate, and a design device of a design pattern according to the present embodiment relate to a lay-up pattern P of a laminate 1 formed by laminating fiber sheets S. Fig. 1 is an explanatory view related to a lay-up pattern. Fig. 2 is a diagram related to the design device of a design pattern according to the present embodiment. Fig. 3 is an explanatory view related to a search model. Fig. 4 is a flowchart related to a training method of a design device according to the present embodiment. Fig. 5 is a flowchart related to training of the search model. Fig. 6 is a flowchart related to the design method of a design pattern according to the present embodiment. Fig. 7 is a flowchart related to the manufacturing method of a laminate according to the present embodiment.

### (Laminate)

In Fig. 1, a view on an upper side is a view showing the lay-up pattern P of the laminate 1 that does not satisfy a constraint condition, and a view on a lower side is a view showing the lay-up pattern P of the laminate 1 that satisfies the constraint condition. As shown in Fig. 1, the laminate 1 is formed by arranging and laminating a plurality of fiber sheets S in a laminating direction and integrally forming. The fiber sheet S is, for example, a prepreg obtained by impregnating a reinforced fiber with a resin and is a unidirectional material in which alignment directions of fibers are one direction. The fiber sheet S is not particularly limited to the prepreg and may be a reinforced fiber sheet in a dry state, which is not impregnated with a resin. The laminate 1 has the predetermined lay-up pattern P in the laminating direction. The lay-up pattern P is arrangement order of an alignment angle formed by a reference direction and the alignment direction of each fiber sheet S in the laminating direction.

In the view on the upper side of Fig. 1, the lay-up pattern P of the laminate 1 has alignment angles of (0, 45, 90, 0, 45, 90, -45, 45, 0, 0, 0, 0). Herein, in the lay-up pattern P, a constraint condition is imposed from required characteristics in some cases. The constraint condition includes a first condition in which a difference between alignment angles of the fiber sheets S adjacent to each other in the laminating direction is 45° or smaller and a second condition in which consecution of the fiber sheets S, of which alignment directions are the same direction, in the laminating direction is three or fewer layers. In the view on the upper side of Fig. 1, the first condition is not satisfied in the fiber sheets S which are adjacent to each other and which are surrounded by a dotted line C1, and the second condition is not satisfied in the fiber sheets S which are arranged and which are surrounded by a dotted line C2. On the contrary, in the view on the lower side of Fig. 1, the lay-up pattern P of the laminate 1 has alignment angles of (0, 0, 45, 90, 45, 90, -45, 0, 45, 0, 0, 0) and satisfies the constraint condition. Although the first condition of the constraint condition is a condition in which a difference in the alignment angle is 45° or smaller, the alignment angle is not particularly limited and may be any alignment angle. In addition, although the second condition of the constraint condition is a condition in which consecution of the fiber sheets S is three or fewer layers, the number of layers is not particularly limited and may be any number of layers. Further, the constraint condition may be a condition depending on characteristics required for the laminate 1 and is not particularly limited to the first condition and the second condition.

### (Design Device of Design Pattern)

A design device 10 of a design pattern is a device that designs a design pattern which is the lay-up pattern P of the laminate 1, which satisfies the constraint condition. In addition, the design device 10 also functions as a learning device for training a search model M for searching for the lay-up pattern P. The design device 10 and the learning device are integrated with each other in the present embodiment, but may be, without particularly being limited thereto, configured as separate bodies.

As shown in Fig. 2, the design device 10 includes a control unit 15 and a storage unit 16.

The storage unit 16 stores a program and data. In addition, the storage unit 16 may also function as a work region where a processing result of the control unit 15 is temporarily stored. The storage unit 16 may include any storage device such as a semiconductor storage device and a magnetic storage device.

The storage unit 16 includes the search model M as a program. The search model M is a learning model for searching for the lay-up pattern P of the laminate 1. The search model M is a learning model in which Monte Carlo tree search and deep reinforcement learning are combined and which includes the constraint condition. In the search model M, a policy function and a value function are used, search for the lay-up pattern P that satisfies the constraint condition is executed by exchanging the alignment angles of the fiber sheets S adjacent to each other in the laminating direction. In addition, the search model M is a learning model that can be trained without training data. The storage unit 16 stores, as data, lay-up data D1 related to the lay-up pattern P and constraint data D2 related to the constraint condition. The lay-up data D1 is information related to the lay-up pattern P shown in Fig. 1 and includes the lay-up data D1 used as an input and the lay-up data D1 acquired as an output. The constraint data D2 is information related to the first condition and the second condition.

The control unit 15 executes a program or gives or receives data to or from the storage unit 16. The control unit 15 includes, for example, an integrated circuit such as a central processing unit (CPU). Specifically, the control unit 15 executes training of the search model M using the lay-up data D1 and the constraint data D2, which are stored in the storage unit 16. In addition, the control unit 15 derives the lay-up pattern P of the laminate 1 that satisfies the constraint condition using the trained search model M.

Herein, deriving of the lay-up pattern P of the laminate 1 that satisfies the constraint condition by the control unit 15 using the search model M will be described with reference to Fig. 3. The lay-up pattern P on the upper side of Fig. 3 corresponds to the lay-up pattern P on the upper side of Fig. 1 and is the lay-up pattern P that does not satisfy the constraint condition. The lay-up pattern P on the lower side of Fig. 3 corresponds to the lay-up pattern P on the lower side of Fig. 1 and is the lay-up pattern P that satisfies the constraint condition. In Fig. 3, when the lay-up pattern P that does not satisfy the constraint condition is input, exchange of alignment angles of the fiber sheets S adjacent to each other in the laminating direction is performed through the search model M in which Monte Carlo tree search and deep reinforcement learning are combined. In Fig. 3, the trained search model M is used, and specifically, the trained policy function and the trained value function, which are included in the search model M, are used. For this reason, the search model M executes search related to exchange of the alignment angles of the fiber sheets S and selects exchange of the alignment angles of the fiber sheets S, which is a policy with high reward, from a search result obtained by executing the search. Then, when the constraint condition is satisfied by the exchange of the alignment angles of the fiber sheets S, the search model M derives the lay-up pattern P that satisfies the constraint condition as a solution.

As shown in Fig. 3, the number of lay-ups of the lay-up pattern P used in the search model M is, for example, 12 layers. In the present embodiment, the number of lay-ups of the lay-up pattern P is the number of lay-ups smaller than the number of lay-ups of the laminate 1. The number of lay-ups of the lay-up pattern P may be the same number of lay-ups as the number of lay-ups of the laminate 1.

### (Training Method of Design Device)

Next, a training method of the design device 10, in which the design device 10 trains the search model M, will be described with reference to Figs. 4 and 5.

As shown in Fig. 4, in a training method of a design device (learning device), first, the control unit 15 of the design device 10 executes a step of acquiring an initial lay-up pattern, which is the lay-up pattern P in an initial state (Step S11). The initial lay-up pattern is, for example, a lay-up pattern that satisfies the constraint condition. Subsequently, the control unit 15 executes Step S12 of training the search model M using the initial lay-up pattern. That is, in Step S12, since the search model M is a model that can be trained without training data, training of the search model M can be executed using the initial lay-up pattern. After then, the control unit 15 evaluates whether or not the search model M after training satisfies the performance (Step S13). In Step S13, the lay-up pattern P, which is an input for evaluation, is input into the trained search model M, and by evaluating whether or not the output lay-up pattern P satisfies the constraint condition, the performance of the search model M is evaluated. In Step S13, in a case where the control unit 15 determines that the performance of the search model M is satisfied (Step S13: Yes), the evaluation of the search model M ends. On the other hand, in Step S13, in a case where the control unit 15 determines that the performance of the search model M is not satisfied (Step S13: No), processing proceeds to Step S12, and training of the search model M is again executed.

Next, Step S12 related to training of the search model M will be specifically described with reference to Fig. 5. In the training of the search model M, when the initial lay-up pattern that satisfies the constraint condition is acquired in Step S11, the control unit 15 exchanges layers of the fiber sheets S, which are a part of the initial lay-up pattern, and generates a plurality of initial lay-up patterns that do not satisfy the constraint condition (Step S21). In Step S21, layers of fiber sheets adjacent to each other may be exchanged, and layers of fiber sheets may be randomly exchanged, but there are no particular limitations. Subsequently, the control unit 15 selects one initial lay-up pattern as an input from the plurality of initial lay-up patterns that do not satisfy the constraint condition (Step S22). The control unit 15 sets the input initial lay-up pattern as the state of the lay-up pattern P (Step S23). Subsequently, the control unit 15 determines whether or not a predetermined episode step number has been reached (Step S24). Herein, a series of flows from Step S23, which is a starting point, again back to Step S23 via Step S26 to Step S28 to be described later are set as one episode step, and the episode step number means the number of repetitions of the episode step. The predetermined episode step number is a numerical value defined in advance. When the control unit 15 determines that the predetermined episode step number has been reached (Step S24: Yes), processing proceeds to Step S29 to be described later. On the other hand, when the control unit 15 determines that the predetermined episode step number has not been reached (Step S24: No), processing proceeds to Step S25.

In Step S25, the control unit 15 determines whether or not the lay-up pattern P, which is in the state of Step S23, satisfies the constraint condition (Step S25). When the control unit 15 determines that the lay-up pattern P satisfies the constraint condition (Step S25: Yes), processing proceeds to Step S29 to be described later. On the other hand, when the control unit 15 determines that the lay-up pattern P does not satisfy the constraint condition (Step S25: No), the control unit 15 executes search based on the lay-up pattern P, which is in the state of Step S23, using the search model M (Step S26). In Step S26, search is executed by exchanging layers of the fiber sheets S adjacent to each other in the lay-up pattern P. Then, in Step S26, the control unit 15 acquires a search result which is a result of executing the search. After then, the control unit 15 determines whether or not the number of searches has reached a predetermined number of times defined in advance (Step S27). When the control unit 15 determines that the number of searches has not been reached the predetermined number of times (Step S27: No), processing again proceeds to Step S26, and the control unit 15 again executes search. As described above, in Step S26, search is repeatedly executed until reaching the predetermined number of searches.

When the control unit 15 determines that the number of searches has reached the predetermined number of times in Step S27 (Step S27: Yes), action (behavior) of selecting one lay-up pattern P after exchange using information of a plurality of search results depending on the number of searches is selected and executed (Step S28), and processing proceeds to Step S23. In Step S23, the control unit 15 sets to the state of the lay-up pattern P selected in Step S28. By executing the action in Step S28, the control unit 15 counts up the episode step number (increases to "+1").

When the control unit 15 determines that the predetermined episode step number has been reached in Step S24 or determines that the lay-up pattern P satisfies the constraint condition in Step S25, processing proceeds to Step S29. In Step S29, the control unit 15 updates the policy function and the value function which are included in the search model M. In Step S29, the policy function and the value function are updated based on information obtained by executing all episode steps. Specifically, in Step S29, when searching for the lay-up pattern P through the search model M, the policy function and the value function are updated such that reward increases as the number of exchanges between layers of the fiber sheets S decreases. Then, the control unit 15 determines whether or not the training of the search model M has ended (Step S30). In Step S30, when the control unit 15 determines that the training has ended (Step S30: Yes), processing proceeds to Step S13. On the other hand, when the control unit 15 determines that the training has not ended in Step S30 (Step S30: No), processing proceeds to Step S22, and the training of the search model M is continued. In Step S30, the end of the training of the search model M may be determined, for example, based on whether or not the training has been executed on all of the plurality of initial lay-up patterns generated in Step S21 or a predetermined number thereof. The end of the training of the search model M is not particularly limited to the above, and any determination may be adopted.

In the training method, when the control unit 15 determines that the lay-up pattern P satisfies the constraint condition by executing Step S25, processing proceeds to Step S29. However, without being limited to the method, even in a case where Step S25 is omitted and the lay-up pattern P satisfies the constraint condition, search through the search model M may be repeatedly executed until the predetermined episode step number has been reached.

### (Design Method of Design Pattern)

Next, the design method of a design pattern using the design device 10 will be described with reference to Fig. 6. The design pattern is the lay-up pattern P of the laminate 1 that satisfies the constraint condition. In Fig. 6, a case where the design pattern of the laminate 1 and the lay-up pattern P used in the search model M have the same number of lay-ups will be described.

As shown in Fig. 6, in the design method of a design pattern, first, the control unit 15 of the design device 10 executes Step S31 of deriving a candidate pattern that is the lay-up pattern P which is a candidate for the laminate 1 through a predetermined algorithm. The predetermined algorithm used in Step S31 is, for example, a genetic algorithm. The candidate pattern is a lay-up pattern related to the entire lay-up of the laminate 1 derived through the predetermined algorithm. In Step S31, the derived candidate pattern is the lay-up pattern P to be input into the search model M. Subsequently, the control unit 15 inputs the candidate pattern into the search model M (Step S32). The control unit 15 sets the input candidate pattern as the state of the lay-up pattern P (Step S33). Subsequently, the control unit 15 executes Step S33 to Step S38 using the trained search model M. Since Step S33 to Step S38 are the same as Step S23 to Step S28 of Fig. 5, description will be omitted. When the control unit 15 determines that the predetermined episode step number has been reached in Step S34 or determines that the lay-up pattern P satisfies the constraint condition in Step S35, the lay-up pattern P, which is a search result, is output as a design pattern (Step S39). The control unit 15 ends processing related to the design method after execution of Step S39.

Herein, the number of lay-ups of the design pattern of the laminate 1 is larger than the number of lay-ups of the lay-up pattern P used in the search model M in some cases. In this case, after the execution of Step S31 of deriving candidate pattern of the laminate 1, the control unit 15 executes a step of extracting, as an extraction pattern, the lay-up pattern P that does not satisfy the constraint condition from the candidate pattern of the laminate 1 as one example. Then, in Step S32, the control unit 15 inputs the extraction pattern into the search model M. In addition, after the execution of Step S31 of deriving the candidate pattern of the laminate 1, the control unit 15 sets the plurality of lay-up patterns P to be arranged in the laminating direction to cover the number of lay-ups of the laminate 1 in Step S32 as another example. At this time, the control unit 15 sets some of the plurality of arranged lay-up patterns P to overlap each other. In the example of overlapping the plurality of lay-up patterns P, the candidate pattern is divided into block units by the number of lay-ups of the lay-up pattern P used in the search model M, and each lay-up pattern P is optimized to satisfy the constraint condition. After then, the lay-up pattern P used in the search model M is set to straddle an interface between blocks, and the lay-up pattern P that straddles the interface may be optimized to satisfy the constraint condition.

### (Manufacturing Method of Laminate)

Next, the manufacturing method of a laminate based on the lay-up pattern P designed by the design device 10 will be described with reference to Fig. 7.

As shown in Fig. 7, in a manufacturing method of the laminate 1, first, Step S41 of laminating the fiber sheets S is executed based on a design pattern derived by the design device 10. In Step S41, for example, the fiber sheets S are laminated using an automatic lay-up device that automatically laminates the fiber sheets S. That is, in Step S41, by inputting the design pattern derived by the design device 10 into the automatic lay-up device, the fiber sheets S are laminated to have a predetermined design pattern. Subsequently, in the manufacturing method of the laminate 1, Step S42 of integrating the laminated fiber sheets S and forming the laminate 1 is executed. In Step S42, in a case where the fiber sheets S are reinforced fiber sheets impregnated with a thermosetting resin, the plurality of laminated fiber sheets S are integrated and become the laminate 1 by thermally curing the resin through heating.

As described above, the training method of the design device 10 (learning device), the design method of a design pattern, the manufacturing method of a laminate, and the design device 10 of a design pattern which are described in the present embodiment are understood, for example, as follows.

The training method of a learning device (the design device 10) according to a first aspect is the training method of a learning device (the design device 10) in which the learning device (the design device 10) trains the search model M for searching for the lay-up pattern P of the laminate 1 formed by laminating the fiber sheets S that are unidirectional materials in which alignment directions of fibers are one direction using the fiber sheets S, and the search model M is a learning model that includes a constraint condition related to lay-up of the fiber sheets S and that uses a policy function and a value function, the method executed by the learning device including Step S11 of acquiring an initial lay-up pattern which is the lay-up pattern P in an initial state and Step S12 of using the initial lay-up pattern as an input and training the search model such that the lay-up pattern P satisfies the constraint condition.

With the configuration, since the lay-up pattern P can become an input of the search model M, search for the lay-up pattern P that satisfies the constraint condition through the search model M can be easily derived compared to a case of using a physical property value as an input.

According to a second aspect, the search model M is a learning model in which Monte Carlo tree search and deep reinforcement learning are combined.

With the configuration, efficient search through the search model M can be executed.

According to a third aspect, Step S12 of training the search model M includes Step S11 of acquiring the lay-up pattern P that satisfies the constraint condition as the initial lay-up pattern, Step S21 of exchanging layers of the fiber sheets S, which are a part of the lay-up pattern P that satisfies the constraint condition, and generating the lay-up pattern P that does not satisfy the constraint condition, and Step S22 of selecting the lay-up pattern P that does not satisfy the constraint condition as an input of the initial lay-up pattern.

With the configuration, since the lay-up pattern P that does not satisfy the constraint condition can be generated using the lay-up pattern P that satisfies the constraint condition, the amount of data used in the training of the search model M can be reduced.

According to a fourth aspect, in Step S12 of training the search model M, when searching for the lay-up pattern P through the search model M, search is executed by exchanging layers of the fiber sheets S adjacent to each other.

With the configuration, since a rule for searching for the lay-up pattern P can be a simple rule, it is possible to efficiently search for the lay-up pattern P that satisfies the constraint condition through the search based on the simple rule.

According to a fifth aspect, Step S12 of training the search model M is training in which reward in the value function increases as the number of exchanges between layers of the fiber sheets S decreases while searching for the lay-up pattern P through the search model M.

With the configuration, the search model M can be trained to quickly derive the appropriate lay-up pattern P in consideration of the constraint condition.

According to a sixth aspect, the constraint condition includes at least any one of a condition related to continuity of the fiber sheets, in which the alignment directions are the same direction, in the laminating direction and a condition related to a difference in an alignment angle formed by alignment directions of the fiber sheets adjacent to each other in the laminating direction.

With the configuration, the laminate 1 that has the lay-up pattern P having required characteristics (strength, rigidity, and occurrence and progress of damage) can be formed.

According to a seventh aspect, the condition related to the continuity of the fiber sheets S is a condition in which consecution of the fiber sheets S is three or fewer layers, and the condition related to the difference in the alignment angle is a condition in which the difference in the alignment angle is 45° or smaller.

With the configuration, characteristics required for the laminate can be appropriately adjusted.

According to an eighth aspect, the number of lay-ups of the lay-up pattern P used in the search model M is the number of lay-ups smaller than the number of lay-ups of the laminate.

With the configuration, since the number of lay-ups of the lay-up pattern P used in the search model M can be made smaller than the number of lay-ups of the laminate 1, the training load of the search model M can be reduced.

The design method of a design pattern according to a ninth aspect is a design method of a design pattern, in which the design pattern that is a lay-up pattern of the laminate which satisfies the constraint condition is designed by the design device using the search model that is trained through the training method of a learning device, the method executed by the design device including Step S31 of deriving a candidate pattern that is the lay-up pattern which is a candidate for the laminate through a predetermined algorithm and Steps S32 to S39 of inputting the candidate pattern of the laminate into the search model and deriving a design pattern that is the lay-up pattern which satisfies the constraint condition.

With the configuration, by inputting a candidate pattern and using the search model M, an appropriate design pattern in consideration of the constraint condition can be easily derived.

According to a tenth aspect, in a case where the number of lay-ups of the design pattern of the laminate 1 is the number of lay-ups larger than the number of lay-ups of the lay-up pattern used in the search model, after the execution of Step S31 of deriving the candidate pattern of the laminate, a step of extracting the lay-up pattern that does not satisfy the constraint condition from the derived candidate pattern of the laminates as an extraction pattern is executed, and the extraction pattern is input into the search model in Steps S32 to S39 of deriving the design pattern that satisfies the constraint condition.

With the configuration, the design pattern of the laminate 1 that satisfies the constraint condition can be derived by setting the lay-up pattern P of the search model M as an extraction pattern that is a part of the candidate pattern of the laminate 1 and that does not satisfy the constraint condition.

According to an eleventh aspect, in a case where the number of lay-ups of the laminate 1 is the number of lay-ups larger than the number of lay-ups of the lay-up pattern P used in the search model M, in Steps S32 to S39 of deriving the design pattern P that satisfies the constraint condition, the plurality of lay-up patterns P are set to be arranged to cover the candidate pattern, and some of the plurality of arranged lay-up patterns P are set to overlap each other.

With the configuration, even in a case where the number of lay-ups of the lay-up pattern P of the search model M is small, the lay-up pattern P of the search model M can be set over all numbers of lay-ups of the candidate pattern of the laminate 1. For this reason, a design pattern of the laminate 1 that satisfies the constraint condition can be set.

According to a twelfth aspect, in Steps S32 to S39 of deriving the design pattern that satisfies the constraint condition, when searching for the lay-up pattern P through the search model M, search is executed by exchanging layers of the fiber sheets S adjacent to each other.

With the configuration, since a rule for searching for the lay-up pattern P can be a simple rule, it is possible to efficiently search for the lay-up pattern P that satisfies the constraint condition through the search based on the simple rule.

The manufacturing method of the laminate 1 according to a thirteenth aspect includes Step S41 of laminating the fiber sheets S based on the design pattern designed through the design method of a design pattern and Step S42 of integrating the laminated fiber sheets S and forming the laminate 1.

With the configuration, the laminate 1 that has the lay-up pattern P which satisfies the constraint condition can be manufactured.

The design device 10 of a design pattern according to a fourteenth aspect is the design device 10 of a design pattern that designs the design pattern which is the lay-up pattern P of the laminate 1, which satisfies the constraint condition, using the search model M trained through the training method of a learning device (the design device 10) and that includes the control unit 15 executing Step S31 of deriving a candidate pattern that is the lay-up pattern P which is a candidate for the laminate 1 through a predetermined algorithm and Steps S32 to S39 of inputting the candidate pattern of the laminate 1 into the search model M and deriving the design pattern that is the lay-up pattern P which satisfies the constraint condition.

With the configuration, by inputting a candidate pattern P and using the search model M, an appropriate design pattern in consideration of the constraint condition can be easily derived.

### Reference Signs List

1 laminate
10 design device
15 control unit
16 storage unit
S fiber sheet
P lay-up pattern
M search model
D1 lay-up data
D2 constraint data

## Claims

1. A training method of a learning device,
in which the learning device trains a search model for searching a lay-up pattern of a laminate formed by laminating fiber sheets that are unidirectional materials in which alignment directions of fibers are one direction using the fiber sheets, and
the search model is a learning model that includes a constraint condition related to lay-ups of the fiber sheets and in which a policy function and a value function are used,
the method executed by the learning device comprising:
a step of acquiring an initial lay-up pattern that is the lay-up pattern in an initial state; and
a step of training the search model such that the lay-up pattern satisfies the constraint condition, using the initial lay-up pattern as an input.

2. The training method of a learning device according to Claim 1,
wherein the search model is a learning model in which Monte Carlo tree search and deep reinforcement learning are combined.

3. The training method of a learning device according to Claim 1 or 2,
wherein the step of training the search model includes
a step of acquiring the lay-up pattern that satisfies the constraint condition as the initial lay-up pattern,
a step of exchanging layers of the fiber sheets that are a part of the lay-up pattern which satisfies the constraint condition and generating the lay-up pattern that does not satisfy the constraint condition, and
a step of selecting the lay-up pattern that does not satisfy the constraint condition as an input of the initial lay-up pattern.

4. The training method of a learning device according to any one of Claims 1 to 3,
wherein in the step of training the search model, when searching for the lay-up pattern through the search model, search is executed by exchanging layers of the fiber sheets adjacent to each other.

5. The training method of a learning device according to Claim 4,
wherein the step of training the search model is training in which reward in the value function increases as the number of exchanges between the layers of the fiber sheets decreases while searching for the lay-up pattern through the search model.

6. The training method of a learning device according to any one of Claims 1 to 5,
wherein the constraint condition includes at least any one of a condition related to continuity of the fiber sheets, in which the alignment directions are the same direction, in a laminating direction and a condition related to a difference in an alignment angle formed by the alignment directions of the fiber sheets adjacent to each other in the laminating direction.

7. The training method of a learning device according to Claim 6,
wherein the condition related to the continuity of the fiber sheets is a condition in which consecution of the fiber sheets is three or fewer layers, and
the condition related to the difference in the alignment angle is a condition in which a difference in an alignment angle is 45° or smaller.

8. The training method of a learning device according to any one of Claims 1 to 7,
wherein the number of lay-ups in the lay-up pattern used in the search model is the number of lay-ups smaller than the number of lay-ups of the laminate.

9. A design method of a design pattern,
in which the design pattern that is a lay-up pattern of the laminate which satisfies the constraint condition is designed by a design device using the search model trained through the training method of a learning device according to any one of Claims 1 to 8,
the method executed by the design device comprising:
a step of deriving a candidate pattern that is the lay-up pattern which is a candidate for the laminate through a predetermined algorithm; and
a step of deriving the design pattern that is the lay-up pattern which satisfies the constraint condition by inputting the candidate pattern of the laminate into the search model.

10. The design method of a design pattern according to Claim 9,
wherein in a case where the number of lay-ups of the design pattern of the laminate is the number of lay-ups larger than the number of lay-ups in the lay-up pattern used in the search model,
after execution of the step of deriving the candidate pattern of the laminate, a step of extracting the lay-up pattern that does not satisfy the constraint condition from the derived candidate pattern of the laminate as an extraction pattern is executed, and
in the step of deriving the design pattern that satisfies the constraint condition, the extraction pattern is input into the search model.

11. The design method of a design pattern according to Claim 9,
wherein in a case where the number of lay-ups of the laminate is the number of lay-ups larger than the number of lay-ups in the lay-up pattern used in the search model, in the step of deriving the design pattern that satisfies the constraint condition, a plurality of the lay-up patterns are set to be arranged to cover the candidate pattern of the laminate, and some of the plurality of arranged lay-up patterns are set to overlap each other.

12. The design method of a design pattern according to any one of Claims 9 to 11,
wherein in the step of deriving the design pattern that satisfies the constraint condition, when searching for the lay-up pattern through the search model, search is executed by exchanging layers of the fiber sheets adjacent to each other.

13. A manufacturing method of a laminate comprising: a step of laminating the fiber sheets based on the design pattern designed through the design method of a design pattern according to any one of Claims 9 to 12; and a step of integrating the laminated fiber sheets and forming the laminate.

14. A design device of a design pattern that designs the design pattern which is a lay-up pattern of the laminate which satisfies the constraint condition using the search model trained through the training method of a learning device according to any one of Claims 1 to 8, the design device comprising:
a control unit that executes
a step of deriving a candidate pattern that is the lay-up pattern which is a candidate for the laminate through a predetermined algorithm, and
a step of deriving the design pattern that is the lay-up pattern which satisfies the constraint condition by inputting the candidate pattern of the laminate into the search model.
